# EUROPÄISCHE PATENTSCHRIFT

(11) **EP 1 999 389 B1**
(45) Veröffentlichungstag und Bekanntmachung des Hinweises auf die Patenterteilung: **01.06.2011**
(21) Anmeldenummer: 07726874.6
(22) Anmeldetag: 14.03.2007
(51) Int. Cl.: F16C 29/06, F16C 33/50

(54) **WÄLZKÖRPERKETTE**
ROLLING ELEMENT CHAIN
CHAÎNE À CORPS DE ROULEMENT

(30) Priorität: 20.03.2006 DE 102006012623
(43) Veröffentlichungstag der Anmeldung: 10.12.2008
(73) Patentinhaber: Schaeffler Technologies GmbH & Co. KG, 91074 Herzogenaurach (DE)
(72) Erfinder: MENGES, Martin, 66424 Homburg (DE); HAUSBERGER, Franziska, 66113 Saarbrücken (DE)
(86) Internationale Anmeldenummer: PCT/EP2007/052377
(87) Internationale Veröffentlichungsnummer: WO 2007/107483

(56) Entgegenhaltungen:
- EP-A- 0 890 754
- EP-A- 0 989 314
- EP-A- 1 342 928
- EP-A- 1 619 401
- DE-A1-102004 015 843
- DE-U- 1 822 746
- DE-U1- 8 914 085
- US-A1- 2005 152 625
- US-A1- 2007 081 746

## Beschreibung

### Gebiet der Erfindung

Die vorliegende Erfindung betrifft eine Wälzkörperkette, mit einer Vielzahl von in einem Käfigband in Reihe hintereinander angeordneten Wälzkörpern. Die Erfindung betrifft insbesondere Wälzkörperketten, die in endlosen Umlaufkanälen von Linearwälzlagern endlos umlaufen.

Aus EP 0 890 754 A1 beispielsweise ist eine Kugelkette bekannt geworden, bei der eine Vielzahl von Kugeln in einem Käfigband in der Reihe hintereinander angeordnet sind. Einander benachbart angeordnete Kugeln sind durch Trennstege des Käfigbandes voneinander getrennt. Quer zur Wälzkörperkette gesehen sind die Trennstege an einem stirnseitigen Ende mit einem entlang der Kugelkette erstreckten flexiblen Käfiggurt einstückig verbunden. Diese Wälzkörperkette ist in einem endlosen Umlaufkanal eines für ein Linearwälzlager vorgesehenen Schlitten angeordnet. Der Umlaufkanal ist von einander gegenüberliegenden Bordwänden begrenzt. Die beiden Bordwände des Umlaufkanals sind jeweils mit u-förmigen Nuten versehen, wobei in die eine Bordwand der flexible Käfiggurt eingreift, und wobei in die andere u-förmige Nut der anderen Bordwand Verbindungsstücke eingreifen, wobei ein Verbindungsstück zwei einander benachbart angeordnete Trennstege an deren von dem flexiblen Käfiggurt abgewandten stirnseitigen Ende einstückig miteinander verbindet. Dieser Verbindungssteg schließt eine Kugeltasche, so dass die in der Kugeltasche angeordnete Kugel vollständig umschlossen ist. Dieser Verbindungssteg springt quer zur Kugelkette gesehen vor, und greift mit seinem vorspringenden Teil in die u-förmige Nut der Bordwand des Umlaufkanals ein. In einer an deren Ausführungsform der EP 0 890 754 A ist lediglich ein Käfiggurt vorgesehen und weisen die Trennstege freien Enden auf.

Die Herstellung von den Obengenannten Kugelketten mit in sich geschlossenen Kugeltaschen ist aufwändig, da die die Kugeltaschen begrenzenden Stegwände der Trennstege sphärisch gewölbt sind. Die hierzu erforderlichen Spritzwerkzeuge sind in ihrem Aufbau und aus wirtschaftlicher Sicht gesehen aufwändig.

Ein weiterer Nachteil kann darin gesehen werden, dass die Bordwände des Umlaufkanals oftmals Teil eines aus Kunststoff im Spritzverfahren hergestellten Einsatzelementes sind, wobei dieses Einsatzelement in den ansonsten aus Stahl gebildeten Schlitten eingesetzt oder eingespritzt ist. Die den Umlaufkanal begrenzenden Bordwände sind aus konstruktiven Gründen dünnwandig ausgeführt. Bei kleinbauenden Baureihen kann es schwierig sein, die beiden einander gegenüberliegend angeordneten Bordwände jeweils mit einer u-förmigen Nut zu versehen, damit die Wälzkörperkette mit dem flexiblen Käfiggurt und mit den erwähnten Verbindungsstücken in diese u-förmigen Nuten eingreifen kann. Diese in beiden Bordwänden vorzusehenden u-förmigen Nuten würden demzufolge zu einer unzulässig reduzierten Wanddicke führen.
Eine Wälzkörperkette mit den Merkmalen des Oberbegriffs ist z.B. aus der Obergenannten EP 0 890 754 A der EP 0 989 314 A oder der EP 1 342 928 A bekannt. Aufgabe der vorliegenden Erfindung ist es, eine Wälzkörperkette gemäß den Merkmalen des Oberbegriffs des Anspruchs 1 anzugeben, die einfach herzustellen ist, und die auch für kleinbauende Linearwälzlager geeignet ist.

Erfindungsgemäß wird diese Aufgabe dadurch gelöst, dass die Trennstege andererseits an ihrem quer zur Wälzkörperkette angeordneten anderen stirnseitigen Ende mit in Erstreckungsrichtung der Wälzkörperkette durchgängigen Ausnehmungen für den Eingriff eines Haltebords zum Halten der Wälzkörperkette versehen sind. Anders als bei der bekannten Kugelkette kragen die Trennstege ausgehend von dem flexiblen Käfiggurt jeweils frei aus. Die von den Trennstegen begrenzten Käfigtaschen zur Aufnahme der Wälzkörper sind demzufolge nicht vollständig umschlossen. Selbst wenn die einander zugewandten Trennwände der Trennstege beispielsweise konkav gewölbt sind, können - im Fall von aus Kunststoff gespritzten Wälzkörperketten - einfache Schieberwerkzeuge vorgesehen werden, die ein Entformen quer zur Erstreckung der Wälzkörperkette ermöglichen.

Vorzugsweise sind die Trennstege einstückig mit dem Käfiggurt verbunden; diese einstückige Verbindung lässt sich problemlos umsetzen, wenn die Wälzkörperkette aus Kunststoff im Spritzverfahren hergestellt wird. Die Trennstücke können alternativ zum Beispiel an den Käfiggurt eingeklipst werden, sofern dies bei besonderen Einsatzbedingungen sinnvoll ist.

Ein weiterer wesentlicher Vorteil der vorliegenden Erfindung kann darin gesehen werden, dass diese Trennstege an ihrem freien Ende mit in der Erstreckungsrichtung der Wälzkörperkette durchgängigen Ausnehmungen versehen sind. Bislang war zum einwandfreien Halten von Wälzkörperketten in einem endlosen Umlaufkanal erforderlich, dass die Wälzkörperkette an ihrer von dem Käfiggurt angewandten Seite in die u-förmige Nut der Bordwand des Umlaufkanals eingreift. Die Erfindung geht nun gerade einen anderen Weg, nämlich dass ein vorspringender Haltebord in diese Ausnehmungen der Trennstege eingreift. Diese Anordnung der durchgängigen Ausnehmung ermöglicht zudem die Gestaltung der Bordwände mit minimiertem Querschnitt oder Wanddicke. Es genügt, wenn bei optimierter Wanddicke der Bordwände eine, im Schnitt gesehen, an die Bordwand eine Nase vorgesehen wird, die entlang dem Umlaufkanal ausgebildet ist und demzufolge diesen Haltebord bildet. Demzufolge eignet sich die erfindungsgemäße Wälzkörperkette insbesondere für kleinbauende Linearwälzlager.

Oftmals werden Wälzkörperketten in endlosen Umlaufkanälen für einen endlosen Wälzkörperumlauf eingesetzt, wobei diese Wälzkörperketten ansich endlich ausgeführt sind. Diese endliche Ausführung hat zur Folge, dass die beiden Enden oder Endstücke der Wälzkörperkette einander im Umlaufkanal gegenüberliegen. Eine erfindungsgemäße Weiterbildung sieht vor, dass an wenigstens einem der beiden Endstücke - in Richtung quer zur Wälzkörperkette gesehen - an dessen von dem flexiblen Käfiggurt abgewandten anderen stirnseitigen freien Ende eine auf das jeweils andere Endstück vorspringende Drucknase als Anschlag für die beiden Endstücke aneinander vorgesehen ist. Diese Drucknase verhindert ein ungewolltes Aufbiegen der Wälzkörperkette, dass nachstehend näher erläutert wird. Bei der erfindungsgemäßen wie auch bei bekannten Wälzkörperketten ist nur ein flexibler Käfiggurt vorgesehen. Die frei auskragenden Trennstege können demzufolge fächerförmig aufbiegen. Bei der erfindungsgemäßen Weiterbildung wird ein Aufbiegen dieser Trennstege dadurch auf ein zulässiges Maß begrenzt, dass bei Erreichen dieser zulässigen Aufbiegung die beide Endstücke mit der einen Drucknase oder mit beiden Drucknasen aneinander anschlagen. Ein weiteres Aufbiegen der Trennstege ist nicht möglich.

Ein in Umlaufrichtung der Wälzkörperkette eingestellter Abstand zwischen den beiden Endstücken ist vorzugsweise kleiner oder gleichgroß wie das Teilkreisendspiel der Wälzkörperkette und größer als Null. Das Teilkreisendspiel wird beeinflusst durch die Toleranzfeldlage der Wälzkörper und des Käfigbandes.

Nachstehend wird die Erfindung anhand von drei in insgesamt sechs Figuren abgebildeten Ausführungsbeispielen näher erläutert. Es zeigen:
- Figur 1: einen Querschnitt durch ein erfindungsgemäßes Linear- wälzlager mit einer erfindungsgemäßen Wälzkörperkette,
- Figur 2: einen Längsschnitt durch das Linearwälzlager aus Figur 1,
- Figur 3: einen Querschnitt durch die erfindungsgemäße Wälzkör- perkette aus Figur 1,
- Figur 4: eine erfindungsgemäße Variante einer Wälzkörperkette im Querschnitt,
- Figur 5: ein Teilstück einer weiteren erfindungsgemäßen Wälzkör- perkette und
- Figur 6: drei Varianten eines endlosen Umlaufkanals des Linear- wälzlagers aus Figur 1 mit drei unterschiedlichen Trenn- ebenen.

### Ausführliche Beschreibung der Zeichnungen

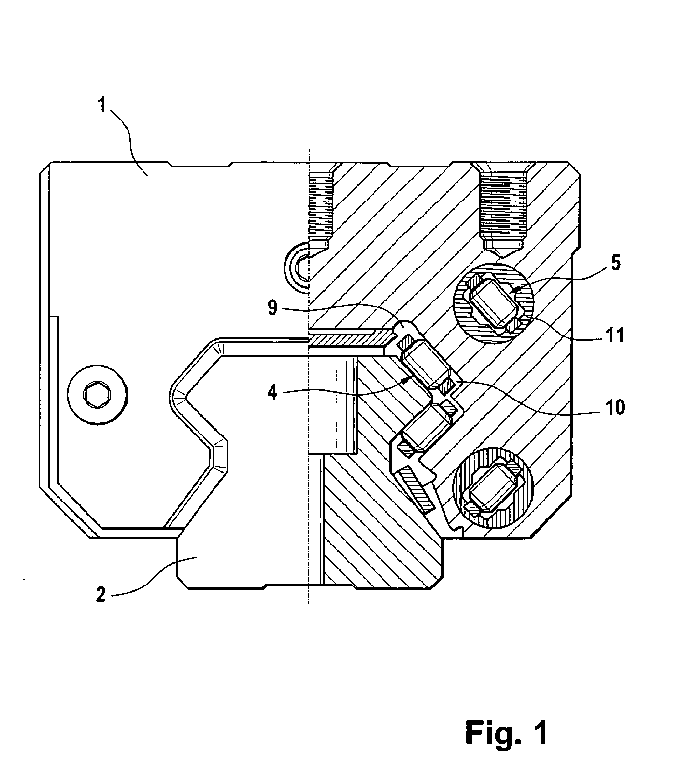

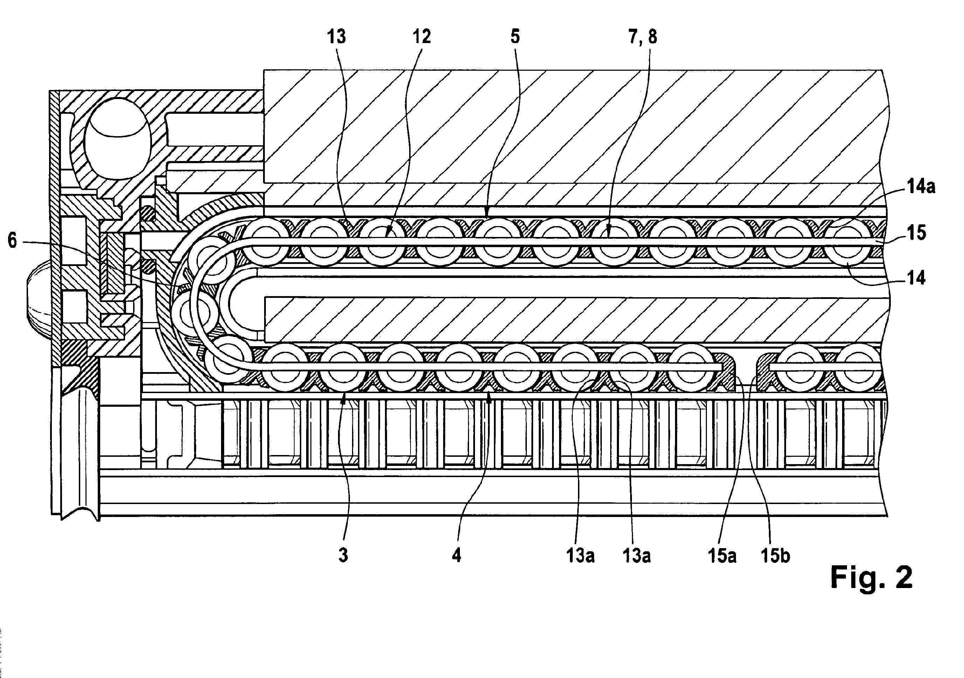

Figur 1 zeigt im Querschnitt ein erfindungsgemäßes Linearwälzlager, das vorliegend als Rollenumlaufeinheit ausgebildet ist. Diese Rollenumlaufeinheit umfasst einen Schlitten 1, der entlang einer Führungsschiene 2 wälzgelagert ist. Der Schlitten 1 ist mit insgesamt vier endlosen Umlaufkanälen 3 versehen, wie sie in Figur 2 in einem Teilschnitt abgebildet sind. Diese Umlaufkanäle 3 umfassen einen Lastabschnitt 4, einen Rücklaufabschnitt 5 und zwei den Lastabschnitt 4 und den Rücklaufabschnitt 5 endlos verbindende Umlenkabschnitte 6. In allen endlosen Umlaufkanälen 3 sind als Rollenketten 7 ausgebildete Wälzkörperketten 8 angeordnet.

Die Umlaufkanäle 3 weisen Bordwände 9, 10, 11 auf, wobei die Bordwände 9, 10 im Lastabschnitt 4 und wobei die Bordwände 11 im Rücklaufabschnitt 5 angeordnet sind.

Die Rollenkette 7 umfasst - wie in Figur 2 gezeigt - eine Vielzahl von in einem Käfigband 12 in Reihe hintereinander angeordnete, durch Trennstege 13 voneinander getrennte Rollen 14. Diese Trennstege 13 sind einerseits an ihrem quer zur Rollenkette 7 angeordneten einen stirnseitigen Ende einstückig mit einem entlang der Rollenkette 7 erstreckten flexiblen Käfiggurt 15 einstückig verbunden. Dieses Käfigband 12 ist aus Kunststoff im Spritzverfahren hergestellt.

Der Figur 2 kann ferner entnommen werden, dass die Rollenkette 7 endlich ausgeführt ist und zwei Endstücke 15a, 15b aufweist. Diese Endstücke 15a, 15b sind auf Lücke angeordnet, also voneinander beabstandet. Die Lücke ist größer oder gleich Null und kleiner als das Teilkreisendspiel der Rollen 14 in ihren Käfigtaschen 14a. Die Käfigtaschen 14a sind begrenzt von den Trennstegen 13, wobei einander zugewandte Trennwände 13a von zwei einander benachbart angeordneten Trennstegen 13 die Form der Käfigtaschen 14a bestimmen. Die Trennwände 13a sind konkav gewölbt und an den Mantelflächen der Rollen 14 angepasst.

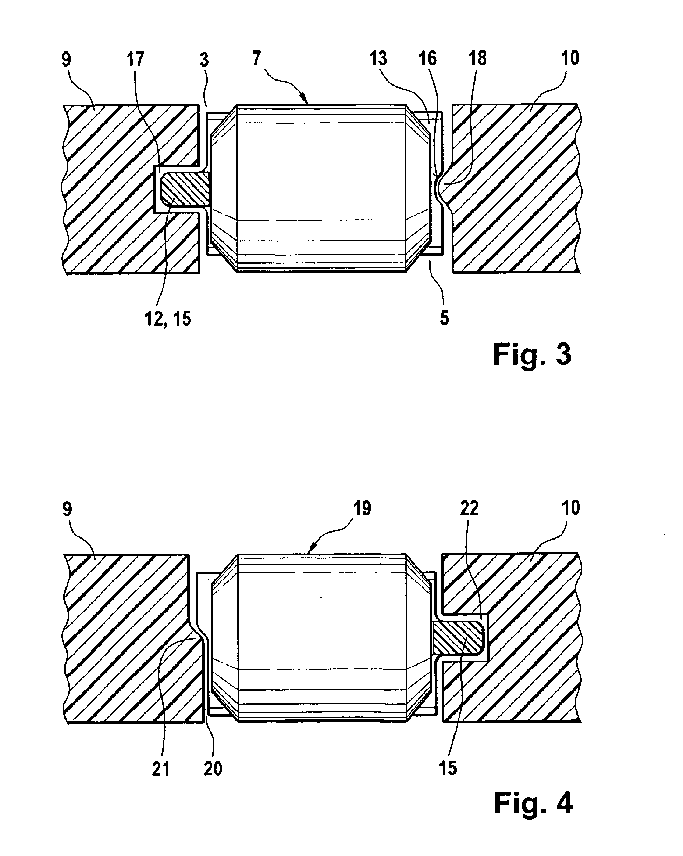

Figur 3 zeigt im Querschnitt in vergrößerter Darstellung die Rollenkette 7 in dem Umlaufkanal 3, wobei die einander gegenüberliegend angeordneten Bordwände 9, 10 des Umlaufkanals 3 angedeutet sind. Die Trennstege 13 sind an ihrem quer zur Wälzkörperkette angeordneten anderen stirnseitigen freien Ende - d.h., jeder Trennsteg 13 kragt ausgehend von dem Käfigband 12 ausgesehen frei aus - mit in Erstreckungsrichtung der Rollenkette 7 durchgängigen Ausnehmungen 16 versehen, die vorliegend als Rille oder Nut ausgebildet sind.

Das Käfigband 12 der Rollenkette 7 greift in eine u-förmige Nut 17 der Bordwand 9 ein. Auf der gegenüberliegenden Seite greift ein an der Bordwand 10 einstückig angeformter Haltebord 18 in die Ausnehmungen 16 der Trennstege 13 ein. Der Haltebord 18 ist in Umlaufrichtung des Umlaufkanals 3 durchgängig an die Bordwand 10 angeformt.

Die Rollenkette 7 ist in dem Umlaufkanal 3 des Schlittens 1 einwandfrei geführt. Selbst wenn der Schlitten 1 von der Führungsschiene 2 abgenommen wird, kann die Rollenkette 7 in dem Rücklaufabschnitt 5 des Umlaufkanals 3 nicht unzulässig durchhängen, denn an beiden Längsseiten ist die Rollenkette 7 gehalten.

Figur 4 zeigt eine Variante des oben beschriebenen Linearwälzlagers, wobei nachstehend lediglich geänderte Merkmale mit ergänzenden Positionszahlen versehen sind. Die Rollenkette 19 gemäß Figur 4 weist ebenfalls eine in Laufrichtung der Wälzkörperkette gesehen durchgängige Ausnehmungen 20 auf, die jedoch anders als in Figur 3 nicht als Nut oder Rille sondern als radial geöffnete Stufe ausgebildet ist. Dementsprechend weist die Nutwand 9 einen umlaufenden Haltebord 21 auf, der in diese Ausnehmung 20 eingreift. Die Bordwand 10 ist mit einer u-förmigen Nut 22 versehen, in die der Käfiggurt 15 der Rollenkette 19 eingreift.

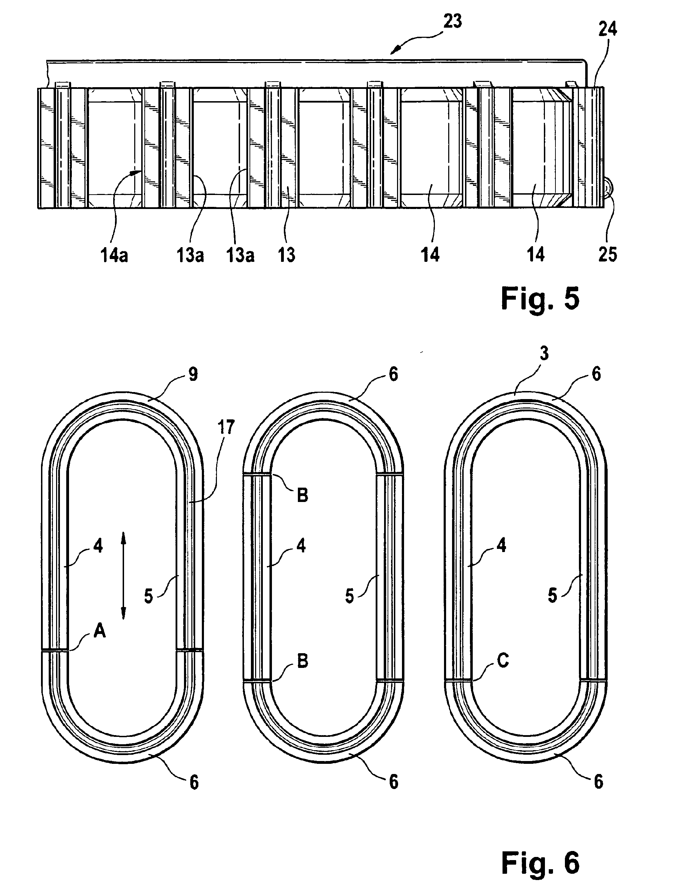

Figur 5 zeigt eine weitere Rollenkette 23, die bezüglich ihrer Halterung im endlosen Umlaufkanal 3 ebenso wie die Rollenketten 7, 19 ausgebildet sein kann. Zusätzlich ist jedoch die Rollenkette 23 an einem ihrer Endstücke 24 mit einem Anschlag 25 versehen, der in Erstreckungsrichtung der Rollenkette 23 dem anderen, hier nicht abgebildeten Endstück zugewandt ist, und auf dieses vorspringt. Der hier nasenförmig ausgebildete Anschlag 25 springt soweit auf das andere, hier nicht abgebildete gegenüberliegende Endstück zu, das ein verbleibendes Spiel in Erstreckungsrichtung der Rollenkette 23 zwischen den beiden Endstücken gleichgroß oder kleiner als das Teilkreisendspiel der Rollen 14 ist.

Figur 6 zeigt drei unterschiedliche Teilungsmöglichkeiten für den Umlaufkanal 3. In dieser schematischen Abbildung ist die Bordwand 9 mit der darin ausgebildeten u-förmigen Nut 17 deutlich zu erkennen. Wenn dieser Umlaufkanal Teil eines Spritzelementes ist, bietet sich an, die Teilungsebenen A, B, C zu wählen. In all diesen Fällen ist ein Entformen des Werkzeuges in den Richtungen parallel zum Lastabschnitt oder auch Rücklaufabschnitt möglich. Die Trennebene A liegt innerhalb des Lastabschnittes 4 oder des Rücklaufabschnittes 5. Die Trennebene B ist gerade im Übergang vom Umlenkabschnitt 6 auf den Lastabschnitt 4 und den Rücklaufabschnitt 5 angeordnet, und zwar an beiden Umlenkabschnitten 6. Die Trennebene C ist wie die Trennebene B angeordnet, jedoch nur für ein Umlenkabschnitt 6. Im Bereich des gegenüberliegenden Umlenkabschnittes ist keine Trennebene vorgesehen.

Der als Drucknase ausgebildete Anschlag 25 kann aus dem gleichen Material oder Kunststoff wie das Käfigband 12 gebildet sein, er kann jedoch auch aus einem beispielsweise weicheren, nachgiebigeren Werkstoff gebildet sein.

Die in den beschriebenen Ausführungsbeispielen vorgesehenen Halteborde 18, 21 können im Spritzverfahren auf einfache Weise gemeinsam mit den Bordwänden hergestellt werden. Die Führung und Halterung der Wälzkörper in dem Umlaufkanal kann über Kunststoffelemente sichergestellt werden, die mit den erfindungsgemäßen Halteborden ausgerüstet sind.
- 1: Schlitten
- 2: Führungsschiene
- 3: Umlaufkanal
- 4: Lastabschnitt
- 5: Rücklaufabschnitt
- 6: Unlenkabschnitt
- 7: Rollenkette
- 8: Wälzkörperkette
- 9: Bordwand
- 10: Bordwand
- 11: Bordwand
- 12: Käfigband
- 13: Trennsteg
- 13a: Trennwand
- 14: Rolle
- 14a: Käfigtasche
- 15: Käfiggurt
- 15a: Endstück
- 15b: Endstück
- 16: Ausnehmung
- 17: u-förmige Nut
- 18: Haltebord
- 19: Rollenkette
- 20: Ausnehmung
- 21: Haltebord
- 22: u-förmige Nut
- 23: Rollenkette
- 24: Endstück
- 25: Anschlag

## Patentansprüche

1. Wälzkörperkette (8), mit einer Vielzahl von in einem Käfigband (12) in Reihe hintereinander angeordneter, durch Trennstege (13) des Käfigbandes (12) voneinander getrennten Wälzkörpern, wobei die Trennstege (13) einerseits an ihrem quer zur Wälzkörperkette (8) angeordneten einen stirnseitigen Ende mit einem entlang der Wälzkörperkette (8) erstreckten flexiblen Käfiggurt (15) verbunden sind, **dadurch gekennzeichnet, dass** die Trennstege (13) andererseits an ihrem quer zur Wälzkörperkette (8) angeordneten anderen stirnseitigen freien Ende mit in Erstreckungsrichtung der Wälzkörperkette (8) durchgängigen Ausnehmungen (16, 20) für den Eingriff eines Haltebords (21, 18) zum Halten der Wälzkörperkette (8) versehen sind.

2. Wälzkörperkette nach Anspruch 1, bei der einander benachbart angeordnete Trennstege (13) mit ihren einander zugewandten, an die Umfangsfläche der Wälzkörper angepassten, konkav gewölbten Trennwänden (13a) Käfigtaschen (14a) zur Aufnahme der Wälzkörper begrenzen.

3. Wälzkörperkette nach Anspruch 1, die endlich mit zwei Endstücken (24) ausgeführt ist, und die für einen endlosen Wälzkörperumlauf in einem endlosen Umlaufkanal (3) vorgesehen ist, wobei an wenigstens einem der beiden Endstücke (24) an dessen von dem flexiblen Käfiggurt (15) abgewandten anderen stirnseitigen freien Ende eine auf das jeweils andere Endstück (24) vorspringende Drucknase als Anschlag (25) für die beiden Endstücke (24) aneinander vorgesehen ist.

4. Linearwälzlager, mit einem Schlitten (1), in dessen endlosem Umlaufkanal (3) eine Wälzkörperkette (8) nach Anspruch 1 angeordnet ist, wobei der Umlaufkanal (3) von einander gegenüberliegenden Bordwänden (9, 10, 11) begrenzt ist, und wobei die eine Bordwand (9, 10) mit einer Haltenut für den Eingriff des flexiblen Käfiggurtes (15) und die andere Bordwand (9, 10) mit dem Haltebord (18, 21) für den Eingriff in die Ausnehmungen (16, 20) der Trennstege (13) des Käfigbandes (12) versehen ist.

5. Linearwälzlager nach Anspruch 4, bei dem der im endlosen Umlaufkanal (3) eingerichtete Haltebord (18, 21) zum Halten einer Wälzkörperkette (8) mit den Merkmalen des Anspruchs 3 in dem endlosen Umlaufkanal (3) vorgesehen ist.

6. Linearwälzlager nach Anspruch 5 bei der ein in Umlaufrichtung der Wälzkörperkette (8) eingestellter Abstand zwischen den beiden Endstücken (24) kleiner als oder gleichgroß wie das Teilkreisendspiel der Wälzkörperkette ist.

## Claims

1. Rolling-body chain (8), with a multiplicity of rolling bodies arranged in a row one behind the other in a cage strip (12) and separated from one another by separating webs (13) of the cage strip (12), the separating webs (13), on the one hand, being connected at their one fore-end, arranged transversally to the rolling-body chain (8), to a flexible cage belt (15) extended along the rolling-body chain (8), **characterized in that** the separating webs (13), on the other hand, are provided at their other, free fore-end, arranged transversally to the rolling-body chain (8), with recesses (16, 20), continuous in the direction of extent of the rolling-body chain (8), for the engagement of the holding rim (21, 18) for holding the rolling-body chain (8).

2. Rolling-body chain according to Claim 1, in which separating webs (13) arranged adjacently to one another delimit with their concavely curved separating walls (13a), facing one another and adapted to the circumferential face of the rolling bodies, cage pockets (14a) for receiving the rolling bodies.

3. Rolling-body chain according to Claim 1, which is designed to be finite with two end pieces (24) and which is intended for the endless orbiting of rolling bodies in an endless orbiting channel (3), at least one of the two end pieces (24) having provided on it, at its other, free fore-end facing away from the flexible cage belt (15), a pressure nose, projecting in each case onto the other end piece (24), as a stop (25) for the two end pieces (24) one against the other.

4. Linear rolling bearing, with a slide (1), in the endless orbiting channel (3) of which is arranged a rolling-body chain (8) according to Claim 1, the orbiting channel (3) being delimited by rim walls (9, 10, 11) lying opposite one another, and one rim wall (9, 10) being provided with a holding groove for the engagement of the flexible cage belt (15) and the other rim wall (9, 10) being provided with the holding rim (18, 21) for engagement into the recesses (16, 20) of the separating webs (13) of the cage strip (12).

5. Linear rolling bearing according to Claim 4, in which the holding rim (18, 21) formed in the endless orbiting channel (3) is provided for holding a rolling-body chain (8) having the features of Claim 3 in the endless orbiting channel (3).

6. Linear rolling bearing according to Claim 5, in which a spacing, set in the orbiting direction of the rolling-body chain (8), between the two end pieces (24) is smaller than or the same size as the pitch-circle end clearance of the rolling-body chain.

## Revendications

1. Chaîne à corps de roulement (8), comportant une multiplicité de corps de roulement disposés en ligne les uns derrière les autres dans une bande formant cage (12) et séparés l'un de l'autre par des barrettes de séparation (13) de la bande formant cage (12), dans laquelle les barrettes de séparation (13) sont d'une part reliées, par leur première extrémité frontale disposée transversalement à la chaîne à corps de roulement (8) à une ceinture de cage flexible (15) s'étendant le long de la chaîne à corps de roulement (8), **caractérisée en ce que** les barrettes de séparation (13) sont d'autre part munies, à leur autre extrémité frontale libre disposée transversalement à la chaîne à corps de roulement (8), de cavités continues (16, 20) dans la direction d'extension de la chaîne à corps de roulement (8), pour l'engagement d'un bord de retenue (21, 18) destiné à retenir la chaîne à corps de roulement (8).

2. Chaîne à corps de roulement selon la revendication 1, dans laquelle des barrettes de séparation (13) disposées l'une près de l'autre délimitent, avec leurs parois de séparation courbes concaves (13a), tournées l'une vers l'autre et adaptées à la surface latérale des corps de roulement, des cellules de cage (14a) destinées à recevoir les corps de roulement.

3. Chaîne à corps de roulement selon la revendication 1, qui est réalisée aux extrémités avec deux pièces d'extrémité (24), et qui est prévue pour une circulation sans fin des corps de roulement dans un canal de circulation sans fin (3), dans laquelle il est prévu sur au moins une des deux pièces d'extrémité (24), sur son autre extrémité frontale libre située à l'opposé de la ceinture de cage flexible (15), un ergot de pression saillant sur l'autre pièce d'extrémité respective (24), comme butée (25) pour les deux pièces d'extrémité (24) l'une contre l'autre.

4. Palier de roulement linéaire, comportant un chariot (1), dont un canal de circulation sans fin (3) contient une chaîne à corps de roulement (8) selon la revendication 1, dans lequel le canal de circulation (3) est délimité par des parois de bord (9, 10, 11) opposées l'une à l'autre, et dans lequel une première paroi de bord (9, 10) est munie d'une rainure de retenue destinée à l'engagement de la ceinture de cage flexible (15) et l'autre paroi de bord (9, 10) est munie du bord de retenue (18, 21) destiné à s'engager dans les cavités (16, 20) des barrettes de séparation (13) de la bande formant cage (12).

5. Palier de roulement linéaire selon la revendication 4, dans lequel le bord de retenue (18, 21) réalisé dans le canal de circulation (3) est prévu pour retenir une chaîne à corps de roulement (8), qui présente les caractéristiques de la revendication 3, dans le canal de circulation sans fin (3).

6. Palier de roulement linéaire selon la revendication 5, dans lequel une distance entre les deux pièces d'extrémité (24), réglée dans la direction de circulation de la chaîne à corps de roulement (8), est inférieure ou égale au jeu d'extrémité du cercle primitif de la chaîne à corps de roulement.
